Europäisches Patentamt

European Patent Office

Office européen des brevets

(19)

(11)  EP 1 558 952 B1

(12)  **FASCICULE DE BREVET EUROPEEN**

(45) Date de publication et mention
de la délivrance du brevet:
**04.10.2006 Bulletin 2006/40**

(21) Numéro de dépôt: **03780301.2**

(22) Date de dépôt: **30.10.2003**

(51) Int Cl.:
**G02B 6/12** (2006.01)          **G02B 6/28** (2006.01)

(86) Numéro de dépôt international:
**PCT/FR2003/050111**

(87) Numéro de publication internationale:
**WO 2004/042439 (21.05.2004 Gazette 2004/21)**

(54) **DIVISEUR OPTIQUE 2 VERS N EN OPTIQUE INTEGREE**

OPTISCHER 2 X N LEISTUNGSTEILER IN INTEGRIERTER OPTIK

2 TO N OPTICAL DIVIDER IN INTEGRATED OPTICS

(84) Etats contractants désignés:
**AT BE BG CH CY CZ DE DK EE ES FI FR GB GR
HU IE IT LI LU MC NL PT RO SE SI SK TR**

(30) Priorité: **04.11.2002 FR 0213747**

(43) Date de publication de la demande:
**03.08.2005 Bulletin 2005/31**

(73) Titulaire: **Teem Photonics
38240 Meylan (FR)**

(72) Inventeurs:
• **JACQUIN, Olivier
F-38000 GRENOBLE (FR)**
• **GUIDOUX, Cyril
F-38000 GRENOBLE (FR)**

(74) Mandataire: **Poulin, Gérard
BREVALEX
3, rue du Docteur Lancereaux
75008 Paris (FR)**

(56) Documents cités:
**EP-A- 0 432 421          EP-A- 0 527 425
EP-A- 0 661 560          EP-A- 0 707 222
WO-A-02/063389          US-B1- 6 222 959**

• **AKIHIRO TAKAGI ET AL: "WAVELENGTH
CHARACTERISTICS OF (2 X 2) OPTICAL
CHANNEL-TYPE DIRECTIONAL COUPLERS
WITH SYMMETRIC OR NONSYMMETRIC
COUPLING STRUCTURES" JOURNAL OF
LIGHTWAVE TECHNOLOGY, IEEE. NEW YORK,
US, vol. 10, no. 6, 1 juin 1992 (1992-06-01), pages
735-746, XP000293260 ISSN: 0733-8724**

**Description**

**Domaine technique**

La présente invention concerne un diviseur optique 2 vers n en optique intégrée. Elle concerne plus précisément un diviseur optique présentant des pertes d'excès et un achromatisme satisfaisants pour les applications visées et en particulier pour des applications dans le domaine des télécommunications optiques, notamment dans les fenêtres spectrales 1260-1360 nm et 1480-1660 nm.

On entend, pour un élément diviseur 2 vers 2, par pertes d'excès et par chromatisme satisfaisants, des pertes d'excès inférieures à 0,2 dB (notamment pour l'ensemble des fenêtres spectrales 1260-1360 nm et 1480-1660 nm) et un achromatisme inférieur à 0,5dB (pour l'ensemble de ces mêmes fenêtres).

L'invention s'applique à tous les domaines nécessitant une fonction optique 2 vers n et plus particulièrement aux domaines des télécommunications.

**Etat de la technique antérieure**

Un diviseur optique 2 vers n (avec n entier supérieur ou égal à 2) est composé d'au moins un élément diviseur optique comportant 2 entrées et 2 sorties permettant de diviser une onde lumineuse injectée dans une des entrées en 2 parties, réparties selon un rapport de division prédéfini dans chacune des sorties.

Lorsque n est supérieur à 2, le diviseur optique comporte plusieurs éléments diviseurs cascadés de façon à présenter 2 entrées et n sorties et permettre la répartition d'une onde lumineuse injectée dans une des 2 entrées sur les n sorties selon un rapport de division prédéfini pour chacune des sorties.

Un diviseur 2 vers 2 classique est par exemple décrit dans le brevet US 5,835,651.

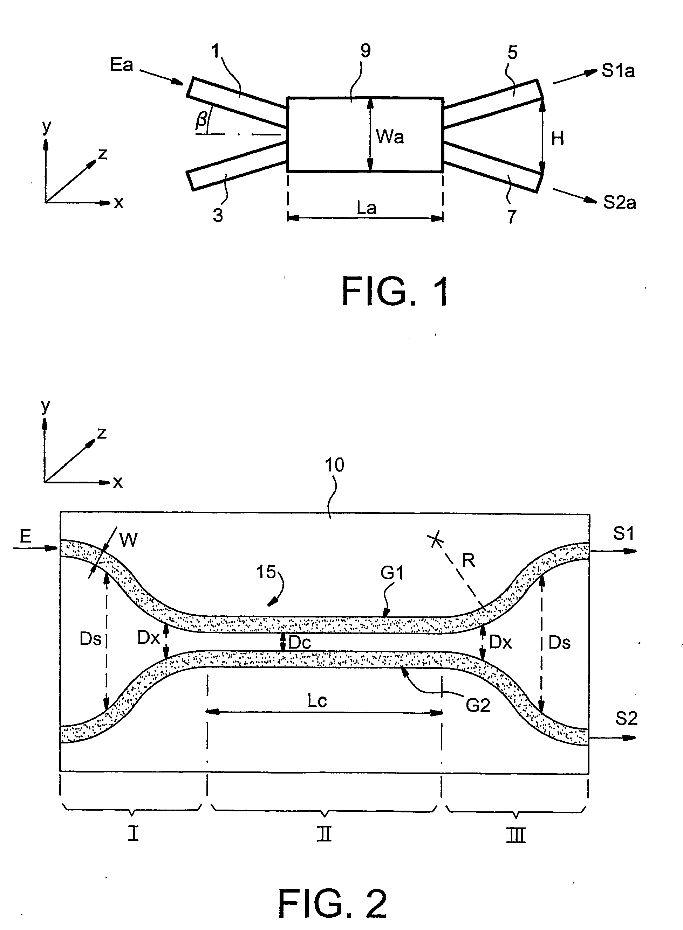

La figure 1 représente schématiquement un diviseur 2 vers 2 classique de ce type réalisé en optique intégrée, dans un plan xy du substrat contenant ledit diviseur.

Sur cette figure, le substrat dans lequel est réalisé le diviseur n'est pas représenté. Seuls sont illustrés un premier et un deuxième guide d'ondes monomodes d'entrées 1 et 3, un premier et un deuxième guide d'ondes monomodes de sorties 5 et 7 et un guide d'ondes bi-modes 9 de longueur La selon l'axe x et de largeur Wa selon l'axe y, raccordant les guides d'ondes d'entrée et les guides d'ondes de sortie. Les guides d'entrée et de sortie sont respectivement raccordés au guide bi-mode, avec un angle β par rapport à l'axe x.

Avec ce diviseur, une onde lumineuse Ea injectée dans un des guides monomodes d'entrée, par exemple le guide 1, se propage dans celui-ci en direction du guide bi-mode 9 en se rapprochant du second guide d'entrée 3 établissant ainsi avec ce dernier un couplage de proximité. Ce couplage de proximité est plus important pour les hautes longueurs d'ondes (telles que les longueurs d'ondes comprises dans la bande spectrale 1480-1660 nm) que pour les basses longueurs d'ondes (telles que les longueurs d'ondes comprises dans la bande spectrale 1260-1360 nm).

Puis en extrémité des guides monomodes d'entrée 1, 3, l'onde lumineuse se couple aux deux modes du guide bi-mode 9. Le couplage entre ces deux modes au cours de la propagation dans le guide bi-mode a un comportement spectral contraire à celui subi dans les guides monomodes, c'est-à-dire un couplage plus faible pour les hautes longueurs d'ondes (1480-1660 nm) que pour les basses longueurs d'ondes (1260-1360 nm).

Enfin, en sortie du guide bi-mode 9, l'onde lumineuse se couple avec une certaine répartition sur les deux guides monomodes de sortie 5, 7. L'onde lumineuse subit alors de nouveau du couplage de proximité et ceci jusqu'à ce que les guides monomodes soient séparés d'une distance H telle que l'onde lumineuse se propageant dans chacun des guides monomodes ne voit plus l'autre guide.

On obtient ainsi une onde lumineuse Ea répartie en deux ondes lumineuses S1a, S2a dans les deux guides monomodes de sortie 5, 7.

Le comportement spectral dans les guides monomodes d'entrée et de sorties qui est contraire au comportement spectral dans le guide bi-mode, permet pour des valeurs de β, de Wa et de La bien choisies, d'obtenir un diviseur 2 vers 2 achromatique. Une valeur de β faible permet en outre de limiter les pertes d'excès.

Bien que satisfaisant à certains égards, dans ce diviseur 2 vers 2, l'onde lumineuse subit une discontinuité à chacune des extrémités du guide bi-mode reliées aux guides monomodes créant des pertes de désadaptation entres les modes du guide bimode et les modes des guides monomodes, ainsi que des pertes de réflexion. Ces pertes de désadaptation et de réflexion sont particulièrement gênantes pour des applications dans le domaine des télécommunications optiques.

Par ailleurs, comme on l'a vu précédemment, les pertes d'excès et l'achromatisme dépendent de β; pour diminuer le chromatisme, β doit augmenter alors que pour diminuer les pertes d'excès β doit diminuer. Ce comportement du diviseur rend difficile la réalisation d'un diviseur 2 vers 2 présentant à la fois un bon achromatisme et de faibles pertes d'excès.

A. Takagi et al. dans « Wavelength characteristics of (2X2) optical channel-type directional couplers with symmetric or nonsymmetric coupling structures », Journal of Lightwave Technology, IEEE, New York, US, Vol. 10, No. 6, 1er juin 1992, pages 735-746, décrit un diviseur 2 vers 2 dont la valeur Lc de couplage est choisie de façon à avoir un élément diviseur achromatique aux longueurs d'onde de fonctionnement du diviseur.

**Exposé de l'invention**

La présente invention a pour objet un diviseur optique 2 vers n en optique intégrée ne présentant pas les limitations et les difficultés des diviseurs de l'art antérieur.

En particulier, un but de l'invention est de proposer un diviseur 2 vers n présentant de faibles pertes d'excès et un achromatisme satisfaisant notamment pour les télécommunications optiques dans l'ensemble des fenêtres spectrales 1260-1360 nm et 1480-1660 nm. Le diviseur de l'invention est avantageusement très faiblement chromatique voire achromatique et présente un minimum de pertes d'excès.

Dans le reste de la description, on entend par achromatique, aussi bien un faible chromatisme (par exemple < 0,5 dB pour les fenêtres spectrales des télécommunications) qu'un achromatisme "parfait".

Un but de l'invention est aussi de réaliser un diviseur 2 vers n dans lequel les pertes d'excès et le chromatisme sont indépendants afin de faciliter sa mise en oeuvre.

Un but de l'invention est encore de proposer un diviseur 2 vers n ne présentant pas de discontinuité pour l'onde lumineuse afin de limiter les pertes de désadaptation et de réflexion.

Pour atteindre ces buts, l'invention propose un diviseur 2 vers n en optique intégrée, avec n entier supérieur ou égal à 2, comportant dans un substrat au moins un élément diviseur optique 2 vers 2, cet élément comprenant un premier et un deuxième guide de largeurs respectivement W1 et W2 aptes à diviser une onde lumineuse d'entrée E introduite dans un des guides, en une première et une deuxième onde de sortie S1 et S2 transportées respectivement par le premier et le deuxième guide ; ces premier et deuxième guides présentent respectivement au moins trois parties :

- une première partie, d'un premier type de couplage, dans laquelle le premier et le deuxième guide se rapprochent progressivement jusqu'à une distance Dc qui est non nulle et inférieure à une distance seuil Ds correspondant à la distance minimum à partir de laquelle l'onde lumineuse d'entrée introduite dans un des guides est apte à être couplé au moins en partie dans l'autre guide,
- une deuxième partie, d'un deuxième type de couplage, de longueur Lc, dite de couplage, dans laquelle lesdits guides sont sensiblement parallèles entre-eux et distants de la valeur Dc,
- et une troisième partie, d'un premier type de couplage, où les guides s'écartent progressivement à partir de la valeur Dc pour être distants d'une valeur supérieure à Ds,

les valeurs Dc, Lc, W1 et W2 sont choisies de façon à avoir un élément diviseur achromatique aux longueurs d'ondes de fonctionnement du diviseur, les valeurs Dc et Lc étant choisies de façon que le premier type de couplage et le deuxième type de couplage varient inversement avec lesdites longueurs d'ondes.

Ce diviseur fonctionne selon les caractéristiques énoncées dans la partie caractérisante de la revendication 1.

L'onde lumineuse est divisée selon un rapport de division CR qui est lié à la sortie d'un des premier ou second guides (par convention).

On entend par guide optique dans l'invention, un guide à confinement latéral, par opposition à guide planaire dans lequel la lumière peut se propager dans un plan : le plan du guide.

Les guides de l'invention sont favorablement monomodes.

Un guide optique se compose d'une partie centrale appelée généralement coeur et de milieux environnants situés tout autour du coeur et qui peuvent être identiques entre eux ou différents.

Pour permettre le confinement de la lumière dans le coeur, l'indice de réfraction du milieu composant le coeur doit être différent et dans la plupart des cas supérieur à ceux des milieux environnants.

Pour simplifier la description, on assimilera le guide à sa partie centrale ou coeur. Par ailleurs, on appellera tout ou partie des milieux environnants, substrat, étant bien entendu que lorsque le guide n'est pas ou peu enterré, un des milieux environnants peut être extérieur au substrat et être par exemple de l'air.

Suivant le type de technique utilisé, le substrat peut être monocouche ou multicouche.

En outre, suivant les applications, un guide optique dans un substrat peut être plus ou moins enterré dans ce substrat et en particulier comporter des portions de guide enterrées, à des profondeurs variables. Ceci est particulièrement vrai dans la technologie d'échange d'ions dans du verre.

Selon un mode de réalisation préféré, le diviseur est réalisé en optique intégrée dans un substrat en verre, par les techniques d'échanges d'ions.

Selon un mode de réalisation de l'invention, dédié notamment à des applications de télécommunications, le premier et le deuxième guide présentent des largeurs respectives W1 et W2 telles que l'élément diviseur compte tenu de Dc et Lc ait un comportement achromatique dans les fenêtres spectrales de fonctionnement de 1260 à 1360 nm et de 1480 à 1660 nm.

Généralement, on choisira W1=W2=W.

De préférence, les guides se rapprochent et/ou s'écartent de façon symétrique.

Les pertes d'excès C peuvent être définies à partir de l'équation suivante :

$$C = 10 \log (P_{S1}+P_{S2})/P_E$$

où $P_{S1}$, $P_{S2}$, $P_E$ représentent les puissances respectivement de l'onde S1, S2 et E.

Le choix des valeurs Dc, Lc, W1 et W2 permet de compenser les phénomènes de couplage de la lumière entre les deux guides, qui sont différents en fonction des longueurs d'onde et ainsi d'avoir un élément diviseur achromatique.

En effet, quand la distance D entre les guides est supérieure à la valeur Ds, il n'y a pas de couplage entre les guides. Lorsque la distance D entre les guides est comprise entre la distance Ds et une distance Dx, les guides établissent un couplage faible de proximité qui est plus important pour les hautes longueurs d'ondes (par exemple 1480-1660 nm) que pour les basses longueurs d'ondes (par exemple 1260-1360 nm). En revanche, lorsque la distance D entre les guides devient petite et comprise entre Dx et Dc, on change alors de régime de fonctionnement et le phénomène mis en jeu est alors du couplage fort de proximité qui est plus faible pour les hautes longueurs d'ondes (par exemple 1480-1660 nm) que pour les basses longueurs d'ondes (par exemple 1260-1360 nm). Ce couplage fort est en particulier réalisé sur la longueur Lc de la deuxième partie.

Par ailleurs, comme Dc est non nul, l'onde lumineuse ne subit dans cet élément diviseur, aucune discontinuité, ce qui se traduit par des pertes d'excès très faibles. Dans un mode de réalisation préféré, Dc doit être supérieure à Dmin avec Dmin = 0,5 μm.

La valeur Dx peut se définir comme la distance séparant les deux guides à partir de laquelle le couplage de proximité est inversé de fort à faible et inversement.

L'élément diviseur 2 vers 2 réalisée selon l'invention peut être assimilé à deux types de coupleurs de proximité ; un premier type de coupleur fonctionnant globalement en régime de couplage faible qui correspond aux parties I et III du diviseur même si, suivant la valeur de Dx, des zones de couplage fort peuvent exister dans ces parties ; un deuxième type de coupleur fonctionnant en régime de couplage fort qui correspond à la parties II du diviseur.

Par ailleurs, dans les parties I et III de l'élément diviseur correspondant aux couplages faibles, le rapprochement des guides et/ou l'éloignement des guides peut se faire selon un arc de cercle de rayon R ≥ Rc, ou selon une fonction de type sinusoïdale présentant un rayon de courbure minimum R ≥ Rc. La valeur Rc est définie comme le rayon de courbure critique au-dessus duquel on n'a pas de pertes de courbure à la longueur d'onde la plus haute des fenêtres spectrales considérées (par exemple 1260-1360 nm et 1480-1660 nm), ceci afin de minimiser les pertes d'excès de l'élément diviseur 2 vers 2.

Dans un des modes de réalisation préférée, le rayon R sera pris égal à Rc afin de limiter au maximum le couplage faible de proximité.

En outre, plus R sera petit plus l'élément diviseur sera compacte. Il est donc doublement avantageux de choisir R = Rc .

Dans le cas d'un diviseur 2 vers n en optique intégrée, avec n entier supérieur 2, ce diviseur comporte dans le substrat un élément diviseur optique 2 vers 2 tel que décrits précédemment et n-2 éléments diviseurs 1 vers 2 cascadés de sorte que le diviseur comporte 2 entrées correspondant aux guides d'entrée de l'élément diviseur 2 vers 2 et n sorties.

Les éléments diviseurs 1 vers 2 sont choisis parmi des coupleurs ou des jonctions Y. Ces éléments diviseurs peuvent être symétriques ou non.

Un élément diviseur dissymétrique peut être obtenu dans le cas d'un coupleur, en jouant sur la longueur d'interaction du coupleur et/ou sur la section des différentes voies de sortie du coupleur.

Un élément diviseur dissymétrique peut être obtenu dans le cas de l'utilisation d'une jonction Y, en jouant sur la section des voies de sortie de la jonction et/ou sur l'angle entre les voies de sortie de la jonction et l'axe optique de la voie d'entrée de la jonction.

D'autres caractéristiques et avantages de l'invention apparaîtront mieux à la lumière de la description qui va suivre et à l'examen des dessins annexés dont la liste est la suivante :

Brève description des figures

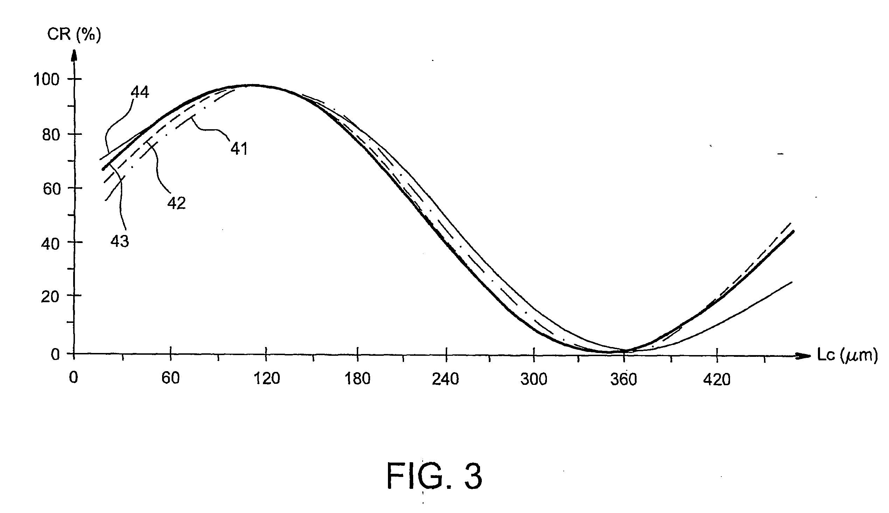

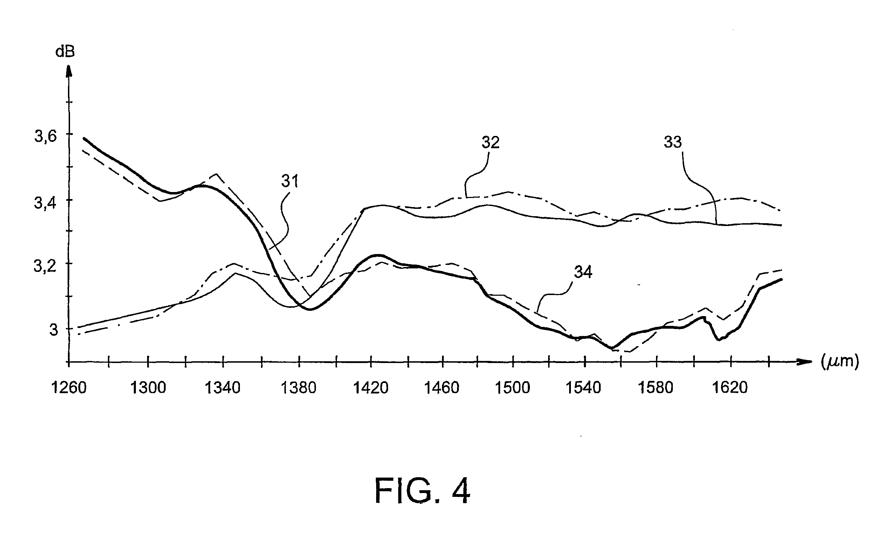

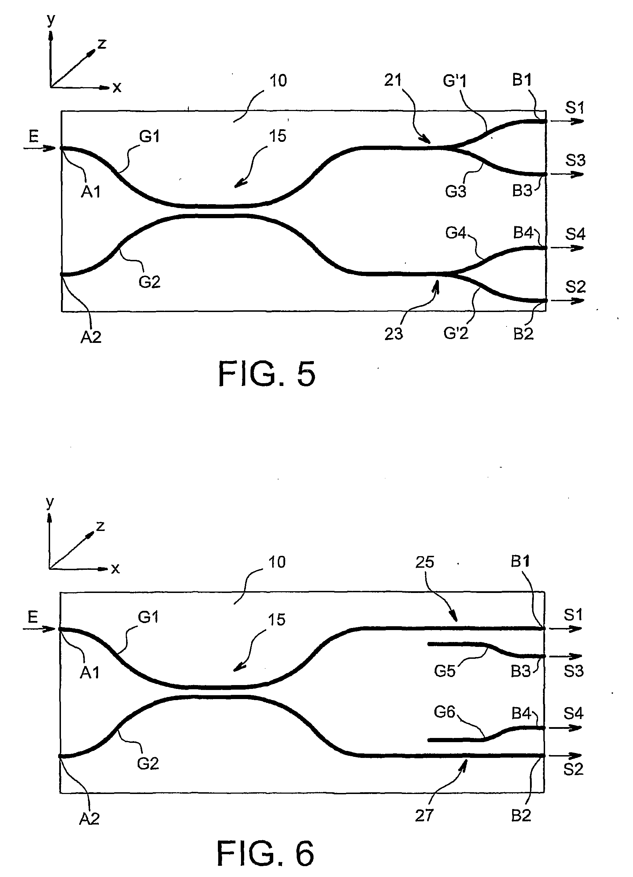

    o La Figure 1 déjà décrite, représente schématiquement un diviseur 2 vers 2 connu,
    o la figure 2 représente schématiquement en coupe un diviseur 2 vers 2 selon l'invention,

o la figure 3 représente schématiquement des graphiques utiles au paramétrage des caractéristiques Dc, W et Lc de l'élément diviseur selon l'invention,

o la figure 4 représente schématiquement la réponse spectrale du dispositif de la figure 2,

o la figure 5 représente schématiquement une première variante de réalisation d'un diviseur 2 vers n, lorsque n est supérieur à 2,

o la figure 6 représente schématiquement une deuxième variante de réalisation d'un diviseur 2 vers n, lorsque n est supérieur à 2.

Description détaillée de modes de mise en oeuvre de l'invention

La figure 2 représente schématiquement un exemple de diviseur 2 vers 2 formé par un élément diviseur 2 vers 2 selon l'invention, apte à diviser une onde lumineuse E en deux parties S1 et S2 selon un rapport de division CR.

Sur ce schéma, on a représenté une coupe partielle d'un substrat 10, dans un plan xy contenant les différentes directions de propagation des ondes lumineuses E, S1 et S2 dans les guides optiques de cet élément.

Cet élément diviseur comprend dans le substrat 10, un premier et un deuxième guides G1 et G2 de préférence monomodes. Ces guides présentent dans cet exemple une largeur identique W. Ils sont combinés entre eux de façon à diviser une onde lumineuse d'entrée E introduite dans un des guides (par exemple G1), en une première et une deuxième ondes de sortie S1 et S2 selon le rapport de division CR, l'onde S1 étant véhiculée par le guide G1 et l'onde S2 étant véhiculée le guide G2. Si l'onde lumineuse E est introduite dans le diviseur à partir du guide G2 alors les guides G1 et G2 permettent de fournir respectivement sur leurs sorties des ondes S1 et S2 selon le rapport de division CR, ces ondes pouvant être différentes de celles fournies par le diviseur lorsque l'onde E est introduite par le guide G1.

Les guides G1 et G2 présentent respectivement au moins trois parties :

- une première partie I dans laquelle les guides G1 et G2 se rapprochent progressivement jusqu'à la distance Dc qui est non nulle et inférieure à une distance seuil Ds correspondant à la distance minimum à partir de laquelle l'onde lumineuse d'entrée E introduite dans l'un des guides voit l'autre guide,
- une deuxième partie II de longueur Lc dite de couplage dans laquelle les guides G1 et G2 sont parallèles entre-eux et distants de la valeur Dc,
- et une troisième partie III où les guides s'écartent progressivement de la valeur Dc à une valeur supérieure à Ds.

Les valeurs Dc, Lc et W sont choisies de façon à avoir un élément diviseur achromatique aux longueurs d'ondes de fonctionnement.

Les distances Ds, Dc sont considérées selon la direction y du plan de coupe de la figure tandis que la longueur Lc est considérée selon la direction x de ce plan.

Dans le domaine des télécommunications, les longueurs d'ondes de fonctionnement correspondent généralement aux fenêtres spectrales 1260-1360 nm et 1480-1660 nm.

Ces guides optiques peuvent être réalisés dans le substrat par toutes types de techniques et en particulier par les techniques d'échange d'ions ou par les techniques de dépôt et de gravure. La délimitation des guides peut être assurée par un masquage approprié. Ces techniques sont bien connues dans le domaine de l'optique intégrée.

Suivant le type de technique utilisé, le substrat peut être monocouche ou multicouche. Par exemple, dans le cas des techniques par échange d'ions, le substrat peut être du verre.

Avec un tel diviseur, une onde lumineuse E introduite dans le guide G1, se propage dans celui-ci, en se rapprochant progressivement du guide G2, établissant ainsi avec celui-ci un couplage de proximité, dès que la distance entre les guides G1 et G2 est inférieure à la valeur seuil Ds (Ds correspondant à la distance minimum à partir de laquelle, pour les longueurs d'ondes de fonctionnement considérées, les deux guides se voient). Tant que la distance D entre les guides G1 et G2 n'est pas trop petite, alors le phénomène mis en jeu est du couplage faible de proximité qui est plus important pour les hautes longueurs d'ondes (par exemple 1480-1660 nm) que pour les basses longueurs d'ondes (par exemple 1260-1360 nm). En revanche, lorsque la distance D entre les guides monomodes devient petite, on change alors de régime de fonctionnement et le phénomène mis en jeu est alors un couplage fort de proximité qui est plus faible pour les hautes longueurs d'ondes (1480-1660 nm) que pour les basses longueurs d'ondes (1260-1360 nm).

Le changement de régime de fonctionnement intervient pour une distance Dx entre les guides qui est comprise entre la valeur Ds et la valeur Dc.

Ainsi, dans la partie I, le couplage de proximité entre les guides passe d'un couplage nul (lorsque D > Ds) à un couplage faible (lorsque Ds > D > Dx) qui est plus important pour les grandes longueurs d'ondes que pour les petites ; puis le couplage de proximité entre les guides passe d'un couplage faible (lorsque Ds > D > Dx) à un couplage fort (lorsque Dx ≥ D ≥ Dc) qui est plus important pour les petites longueurs d'ondes que pour les grandes. Ce couplage fort de proximité est maintenu dans la partie II dans laquelle la distance D entre les guides G1 et G2 est égale à Dc (Dx ≥ Dc) . Enfin dans la partie III, le couplage repasse d'un couplage fort (lorsque Dx ≥ D ≥ Dc) à un couplage faible (lorsque Ds > D > Dx) avec comme précédemment une inversion de comportement de couplage pour les longueurs d'ondes hautes et basses. Enfin, pour une distance D entre les guides supérieure à Ds, il n'y a plus de couplage entre les deux guides.

On obtient ainsi une onde lumineuse E répartie selon les deux ondes S1 et S2 dans les deux guides monomodes G1 et G2. Ce comportement contraire entre le couplage faible de proximité et le couplage fort de proximité permet par phénomène de compensation, pour des valeurs de Dc, de W et Lc bien choisies, d'obtenir un élément diviseur achromatique. De plus dans ce dispositif, Dc étant non nul, l'onde lumineuse ne subit aucune discontinuité, ce qui se traduit par des pertes d'excès très faibles et par la suppression de la dépendance entre pertes d'excès et chromatisme. Dc est supérieure à 0 et dans un des modes de réalisation préféré, Dc doit être supérieure à Dmin avec Dmin = 0,5 μm.

Les paramètres libres permettant de modifier le chromatisme sont : Dc, W et Lc, ce dernier dans une moindre mesure comme nous le verrons dans la suite de la description. Dc, W et Lc ont très peu de répercussions sur les pertes d'excès, assurant ainsi également une indépendance entre ces dernières et le chromatisme. Cette indépendance facilite en outre la mise en oeuvre de l'élément diviseur 2 vers 2.

Comme on l'a vu précédemment, le rapprochement des guides peut se faire avec un arc de cercle de rayon R ≥ Rc, ou avec une fonction de type sinus présentant un rayon de courbure R tel que R ≥ Rc. Rc est défini comme le rayon de courbure critique au-delà duquel on n'a pas dé pertes de courbure à la longueur d'onde de la plus haute des fenêtres spectrales de fonctionnement considérées (par exemple 1260-1360 nm et 1480-1660 nm), ceci afin de minimiser les pertes d'excès de l'élément diviseur 2 vers 2.

Dans un des modes de réalisation préférée le rayon R sera pris égal à Rc afin de limiter au maximum le couplage faible de proximité. A titre d'exemple Rc = 30000 μm.

L'élément diviseur permet de diviser une onde E en deux parties selon un rapport de division CR telle que :

$$\text{CR} = P_{S2} / (P_{S1} + P_{S2})$$

$$\text{par rapport au guide G2} \quad (\text{équation 1})$$

$$(\text{ou CR} = P_{S1} / (P_{S1} + P_{S2}))$$

$$\text{par rapport au guide G1}),$$

$P_{S1}$, $P_{S2}$ étant respectivement les puissances lumineuses des ondes lumineuses S1 et S2.

Par ailleurs, comme on l'a vu précédemment, l'élément diviseur 2 vers 2 réalisée selon l'invention peut être assimilé à deux types de coupleurs de proximité ; un premier type de coupleur fonctionnant globalement en régime de couplage faible qui correspond aux parties I et III du diviseur même si, suivant la valeur de Dx, des zones de couplage fort peuvent exister dans ces parties ; un deuxième type de coupleur fonctionnant en régime de couplage fort qui correspond à la partie II du diviseur.

D'une façon générale, pour l'amplitude de l'onde, la matrice de transfert Ti d'un coupleur i s'écrit :

$$T_i = \begin{pmatrix} \cos(K_i L_i) & \sin(K_i L_i) \\ \sin(K_i L_i) & \cos(K_i L_i) \end{pmatrix}$$

L'élément diviseur de l'invention 2 vers 2 étant assimilé à 2 coupleurs disposés l'un après l'autre, si l'on injecte dans le guide G1 une onde lumineuse E, la puissance lumineuse en sortie du guide G2 peut s'écrire :

$$P_{S2} = (P_{S1} + P_{S2}) \cdot (\sin(K_1 \cdot L_1) \cdot \cos(K_2 \cdot L_2) + \cos(K_1 \cdot L_1) \cdot \sin(K_2 \cdot L_2))^2,$$

soit :

$$P_{S2} = (P_{S1} + P_{S2}) \cdot \sin^2(K_1 \cdot L_1 + K_2 \cdot L_2) \quad (\text{équation 2})$$

où K1, L1 sont les paramètres du coupleur effectif associé aux bras d'approche dans les parties I et III, et K2, L2 sont les paramètres du coupleur de couplage fort associé à la partie II. Ainsi, K1 = $K_{faible}$, L1 = $L_{eff}$ et K2 = $K_{fort}$, L2 = Lc. Les coefficients de couplage Ki sont des fonctions respectivement de $\lambda$, de la largeur W des guides et de la distance D les séparant.

A partir des équations 1 et 2 , on peut donc écrire le rapport de division CR (par exemple par rapport au guide G2) sous la forme d'une fonction sinusoïdale notamment de Lc :

$$CR = \sin^2(K_{faible}(\lambda, W, D_{eff}) . L_{eff} + K_{fort}(\lambda, W, Dc) . Lc)$$

$$(Equation\ 3)$$

où :

o $K_{faible}(\lambda, W, D_{eff})$ est le coefficient de couplage de proximité du coupleur faible d'entraxe effectif $D_{eff}$ et de longueur effectif $L_{eff}$ de l'élément diviseur que l'on peut associer aux guides G1 et G2 dans les parties I et III d'approches,
o $\lambda$ est la longueur d'onde considérée de l'onde lumineuse,
o $K_{fort}(\lambda, W, Dc)$ est le coefficient de couplage de proximité du coupleur fort d'entraxe Dc et de longueur Lc, de l'élément diviseur que l'on peut associer à la partie II,
o W est la largeur des guides monomodes de l'élément diviseur 2 vers 2.

Le premier coupleur correspondant dans la partie I et dans la partie III essentiellement aux bras d'approches courbes des guides G1 et G2 présente un entraxe effectif $D_{eff}$ qui est est assez grand car il correspond à la distance moyenne entre les bras d'approche. De ce fait, ce coupleur fonctionne en régime de couplage faible qui est caractérisé par un couplage plus important aux hautes longueurs d'ondes qu'aux basses longueurs d'ondes. $K_{faible}$ est donc une fonction croissante de $\lambda$ qui dépend de $D_{eff}$ et $L_{eff}$. Ces paramètres sont directement reliés au rayon de courbure moyen R des bras d'approche courbes des guides G1 et G2 dans les parties I et III. Le couplage entre les bras d'approche augmente lorsque R augmente, donc pour limiter ce couplage, il faut que R soit le plus petit possible. Afin de limiter ce couplage (R le plus petit possible), mais également les pertes d'excès (R $\geq$ $R_c$), il est avantageux de prendre R = $R_c$ avec $R_c$ défini comme le rayon de courbure minimum au-delà duquel on n'a pas de pertes de courbure à la longueur d'onde la plus hautes des fenêtres spectrales considérées.
A titre d'exemple, Rc = 30000 $\mu$m.
Le second coupleur de proximité correspond au moins à la partie II dans laquelle les deux guides G1 et G2 sont sensiblement parrallèles et distants de Dc. Dans ce coupleur, la distance Dc doit être petite de façon à avoir un fort couplage entre les guides G1 et G2. Ainsi, ce coupleur fonctionne en régime de couplage fort pour lequel le couplage est plus important aux basses longueurs d'ondes qu'aux hautes longueurs d'ondes. $K_{fort}$ est donc une fonction décroissante de $\lambda$ contrairement à $K_{faible}$. Le coefficient $K_{fort}$ dépend des paramètres W et $D_c$, (quand ces derniers augmentent, le coefficient de couplage $K_{fort}$ diminue) ainsi que de $\lambda$. Afin de limiter d'éventuelles pertes de désadaptation de mode, il est préconisé de prendre $D_c \geq$ Dmin.
La variation contraire de $K_{faible}$ et de $K_{fort}$ se traduit par la possibilité d'obtenir un rapport de division entre les deux bras de sortie des guides G1 et G2 (dans la partie III) très peu dépendant de $\lambda$. Il faut pour cela que l'évolution en fonction de $\lambda$ de $K_{faible}$ et $K_{fort}$ soit à peu prés identique mais de sens contraire. Les paramètres qui permettent d'obtenir cette compensation entre le couplage fort et le couplage faible sont donc Dc et W.
La figure 3 représente pour différentes longueurs d'onde les variations de CR en fonction de Lc pour des valeurs de Dc = 1,2 $\mu$m et W = 2,8 $\mu$m.
Ces courbes ont été obtenues expérimentalement en faisant varier Lc de 0 à 450 $\mu$m pour les longueurs d'onde 1260 nm (courbe 41), 1360 nm (courbe 42), 1480 nm (courbe 43) et 1660 nm (courbe 44).
Ainsi d'après l'équation 1 et comme le montre la figure 3, le rapport de division CR entre les bras de sortie des guides est une fonction sinusoïdale de $L_{fort}$ et donc de Lc. Le paramètre Lc permet donc d'ajuster ce rapport de division. Dans le cas ou il y a compensation entre le couplage fort et le couplage faible pour une fenêtre spectrale donnée, alors les variations de CR en fonction de Lc, associées aux longueurs d'onde de cette fenêtre spectrale, sont des sinusoïdes très proches les unes des autres, comme le montre la figure 3. Plus les sinusoïdes sont confondues et plus l'élément diviseur 2 vers 2 est achromatique. L'étude de CR en fonction de Lc permet de paramétrer l'élément diviseur.
Si les périodes de la fonction sinusoïdale CR (Lc) sont plus longues aux hautes longueurs d'onde qu'aux basses longueurs d'onde alors la zone de couplage fort (partie II essentiellement) compense trop les zones de couplages faibles (parties 1 et III). Dans ce cas il faut augmenter Dc et/ou W pour avoir une bonne compensation chromatique entre ces deux zones.

Les courbes de la figure 4 illustrent pour un élément diviseur 2 vers 2 tel que celui représenté figure 2, les pertes totales (dont les pertes d'excès) de l'onde lumineuse entre l'entrée par un des guides et la sortie de cette onde par un des guides, en fonction des longueurs d'ondes.

Ainsi, on a représenté les pertes pour une onde E :

- entrant par le guide G1 et sortant par le guide G1 (courbe $E_{G1}$, S1 référencée 31),
- entrant par le guide G1 et sortant par le guide G2 (courbe $E_{G1}$, S2 référencée 32),
- entrant par le guide G2 et sortant par le guide G1 (courbe $E_{G2}$, S1 référencée 33),
- entrant par le guide G2 et sortant par le guide G2 (courbe $E_{G2}$, S2 référencée 34).

Ces courbes ont été obtenues pour un élément diviseur 2x2 dans lequel Lc = 220 $\mu$m, CR = 0,5. Les pertes d'excès de cet élément sont faibles et inférieures à 0,15 dB.

On remarque sur la figure 4 que dans les fenêtres spectrales 1260-1360 nm et 1480-1660 nm les pertes totales ne varient pas de plus de 0,5 dB, on peut donc dire que cet élément diviseur est très peu chromatique et présente de très faibles pertes d'excès.

Selon un mode avantageux, on peut choisir pour un élément diviseur 2 vers 2 selon l'invention assurant un rapport de division de 0,5 et fonctionnant dans les fenêtres spectrales 1260-1360 nm et 1480-1660 nm :

- des largeurs de guides W tels que W < Wc où Wc est la largeur maximum pour laquelle les guides sont monomodes pour des longueur d'ondes supérieures à 1260nm,
- un rayon de courbure R des guides dans les parties I et III tel que R = $R_c$ où Rc est le rayon de courbure minimum pour lequel les pertes de courbure à 1660 nm sont négligeables,
- Dc et W tels que les courbes de variation du rapport de division CR en fonction de Lc soient confondues pour les longueur d'ondes appartenant aux fenêtres spectrales 1260-1360 nm et 1480-1660 nm,
- Lc tel que le rapport de division CR soit égal à 0,5.

A titre d'exemple, on peut choisir :

- Dc entre 0,6 à 2,6 $\mu$m,
- W entre 1,6 $\mu$m à Wc,
- Lc entre 0 à 450 $\mu$m.

Les figures 5 et 6 représentent schématiquement, respectivement un diviseur 2 vers n selon l'invention dans le cas particulier de n = 4.

Ces figures illustrent une coupe partielle du substrat 10, dans un plan xy contenant les différentes directions de propagation des ondes lumineuses dans le diviseur de l'invention.

Ce diviseur comporte dans le substrat 10 un élément diviseur 15 de type 2 vers 2 tel que celui décrit en référence à la figure 2 cascadé avec 2 éléments diviseurs de type 1 vers 2 qui peuvent être symétriques ou non.

Ainsi, chacune des extrémités de sortie des guides G1 et G2 de l'élément 15 est reliée optiquement à un diviseur dé type 1 vers 2 de sorte que le diviseur comporte en final deux entrées référencées A1 et A2 aptes à recevoir une onde E et 4 sorties référencées B1, B2, B3, B4 aptes à fournir en sortie respectivement une onde S1, S2, S3, S4.

Sur la figure 5, les 2 éléments diviseurs 1 vers 2 sont réalisés par des jonctions Y référencées 21 et 23, la jonction 21 est reliée au guide G1 tandis que la jonction 23 est reliée au guide G2. La jonction 21 comporte en outre deux guides de sorties G'1 apte à fournir l'onde de sortie S1 et G3 apte à fournir l'onde de sortie S3 ; la jonction 23 comporte également deux guides de sorties G'2 apte à fournir l'onde de sortie S2 et G4 apte à fournir l'onde de sortie S4.

Pour obtenir des rapports de division différent de 0,5 entre les différentes branches de chaque jonction Y, on joue sur la section des guides de sortie de la jonction et/ou sur l'angle entre les guides de sortie de la jonction et l'axe optique du guide d'entrée de la jonction.

Sur la figure 6, les 2 éléments diviseurs 1 vers 2 sont réalisés par des coupleurs 25 et 27. Le coupleur 25 est réalisé par le guide G1 et un guide G5 dont une partie est située au voisinage du guide G1 afin de coupler une partie de l'onde véhiculée dans le guide G1, dans le guide G5. Les guides G1 et G5 fournissent donc en sortie les ondes S1 et S3. Le coupleur 27 est réalisé par le guide G2 et un guide G6 dont une partie est située au voisinage du guide G2 afin de coupler une partie de l'onde véhiculée dans le guide G2, dans le guide G6. Les guides G2 et G6 fournissent donc en sortie les ondes S2 et S4.

Pour obtenir des rapports de division différent de 0,5 entre les différentes sorties des coupleurs, on joue sur la longueur d'interaction du coupleur et/ou sur la section des différents guides de sortie du coupleur.

**Revendications**

1. Diviseur 2 vers n en optique intégrée, avec n entier supérieur ou égal à 2, comportant dans un substrat au moins un élément diviseur optique (15) 2 vers 2, cet élément comprenant un premier et un deuxième guide (G1 , G2) de largeurs respectivement W1 et W2 aptes à diviser une onde lumineuse d'entrée (E) introduite dans un des guides, en une première et une deuxième onde de sortie (S1, S2) transportées respectivement par le premier et le deuxième guide ; ces premier et deuxième guides présentant respectivement au moins trois parties :

   - une première partie (I), d'un premier type de couplage, dans laquelle le premier et le deuxième guide se rapprochent progressivement jusqu'à une distance Dc qui est non nulle et inférieure à une distance seuil Ds correspondant à la distance minimum à partir de laquelle l'onde lumineuse d'entrée introduite dans un des guides est apte à être couplée au moins en partie dans l'autre guide,
   - une deuxième partie (II), d'un deuxième type de couplage, de longueur Lc, dite de couplage, dans laquelle lesdits guides sont sensiblement parallèles entre-eux et distant de la valeur Dc,
   - et une troisième partie (III), d'un premier type de couplage, dans laquelle les guides s'écartent progressivement de la valeur Dc pour atteindre une distance de valeur supérieure à Ds, les valeurs Dc, Lc,' W1 et W2 sont choisies de façon à avoir un élément diviseur achromatique aux longueurs d'ondes de fonctionnement du diviseur, les valeurs Dc et Lc étant choisies de façon que le premier type de couplage et le deuxième type de couplage varient inversement avec lesdites longueurs d'ondes,
   **caractérisé en ce que** :

   l'élément diviseur 2 vers 2 fonctionnant dans des fenêtres spectrales 1260-1360 nm et 1480-1660 nm et présentant un rapport de division CR égal à 0,5 , on choisit les largeurs W1 et W2 allant de 1,6 $\mu$m à Wc, la distance Dc allant de 0,6 à 2,6 $\mu$m et la longueur Lc allant de 0 à 450 $\mu$m, Wc étant la largeur maximum pour laquelle les guides sont monomodes pour lesdites fenêtres spectales.>

2. Diviseur selon la revendication 1 **caractérisé en ce que** le substrat est du verre et les guides sont réalisés par échange d'ions dans le substrat.

3. Diviseur selon l'une quelconque des revendications 1 à 2, **caractérisé en ce que** :

   le premier et le deuxième guide (G1, G2) présentent des largeurs respectives W1 et W2 telles que l'élément diviseur 2 vers 2, compte tenu des valeurs de Dc et Lc ait un comportement achromatique dans les fenêtres spectrales de fonctionnement de 1260 à 1360 nm et de 1480 à 1660 nm.

4. Diviseur selon l'une quelconque des revendications 1 à 3, **caractérisé en ce que** :

   les guides (G1, G2) de l'élément diviseur 2 vers 2 se rapprochent et/ou s'écartent de façon symétrique.

5. Diviseur selon l'une quelconque des revendications 1 à 4, **caractérisé en ce que** la valeur Dc est inférieure ou égale à une valeur Dx correspondant à la distance séparant les premier et deuxième guides pour laquelle le couplage entre lesdits guides est inversé de fort à faible et inversement, le couplage faible signifiant un couplage plus important aux hautes longueurs d'onde qu'aux basses longueurs d'onde et le couplage fort signifiant un couplage plus important aux basses longueurs d'onde qu'aux hautes longueurs d'onde.

6. Diviseur selon l'une quelconque des revendications 1 à 5, **caractérisé en ce que** :

   dans les première et troisième parties de l'élément diviseur 2 vers 2, le rapprochement des premier et deuxième guides et/ou l'éloignement desdits guides se fait selon un arc de cercle de rayon R $\geq$ Rc, ou selon une fonction de type sinusoïdale présentant un rayon de courbure minimum R tel que R $\geq$ Rc où Rc est définie comme le rayon de courbure critique au-dessus duquel on n'a pas de pertes de courbure à la longueur d'onde la plus haute des longueurs d'onde de fonctionnement

7. Diviseur selon la revendication 6, **caractérisé en ce que** R = Rc.

8. Diviseur selon l'une quelconque des revendications 1 à 7, **caractérisé en ce que** :

   n étant supérieur 2, ce diviseur comporte dans le substrat un élément diviseur optique 2 vers 2 et n-2 éléments diviseurs 1 vers 2 cascadés de sorte que le diviseur comporte 2 entrées correspondants aux premier et au deuxième guides de l'élément diviseur 2 vers 2 et n sorties.

9. Diviseur selon la revendication 8, **caractérisé en ce que** les n-2 éléments diviseurs 1 vers 2 sont choisis parmi des coupleurs et/ou des jonctions Y.

## Claims

1. 2 to n divider with integrated optics, where n is an integer greater than or equal to 2, composed of at least one 2 to 2 optical divider element (15) in a substrate, this element comprising a first and a second guide (G1, G2) with widths equal to W1 and W2 respectively, suitable for dividing an input light wave (E) input into one of the guides, into a first and second output wave (S1, S2) transported by the first and second guides respectively; these first and second guides having at least three parts:

   - a first part (I), of a first coupling type, in which the first and second guides progressively move towards each other, until a distance Dc that is not zero and is less than a threshold distance Ds corresponding to the minimum distance starting from which the input light wave input into one of the guides can be at least partly coupled in the other guide,
   - a second part (II), of a second coupling type, with length Lc, called the coupling length, in which said guides are approximately parallel to each other and are distant by the value Dc,
   - and a third part (III), of a first coupling type, in which the guides gradually separate starting from the value Dc until they are separated by a value of more than Ds,

   the values Dc, Lc, W1 and W2 are chosen so as to obtain an achromatic divider element at the divider operating wavelengths, the values Dc and Lc being chosen so that the first coupling type and the second coupling type vary conversely with said wavelengths, **characterized in that** the 2 to 2 divider element operating in the 1260-1360 nm and 1480-1660 nm spectral windows and having a division ratio CR equal to 0.5, the widths W1 and W2 are chosen to vary from 1.6 $\mu$m to Wc, the distance Dc varying from 0.6 to 2.6 $\mu$m and the length Lc varying from 0 to 450 $\mu$m, Wc being the maximum width for which the guides are single mode for said spectral windows.

2. Divider according to claim 1, **characterized in that** the substrate is glass and the guides are made by ion exchange in the substrate.

3. Divider according to either of claims 1 and 2, **characterized in that**:

   the first and the second guides (G1, G2) have widths W1 and W2 respectively such that the behaviour of the 2 to 2 divider element based on Dc and Lc is achromatic in the operational spectral windows from 1260 to 1360 nm and from 1480 to 1660 nm.

4. Divider according to any one of claims 1 to 3, **characterized in that**:

   the guides (G1, G2) of the 2 to 2 divider element become closer to each other and/or separate from each other symmetrically.

5. Divider according to any one of claims 1 to 4, **characterized in that**:

   the value Dc is less than or equal to the value Dx corresponding to the distance separating the first and second guides for which coupling between said guides is inverted from strong to weak and vice versa, the weak coupling signifying a coupling more important at high wavelengths than at low wavelengths and the strong coupling signifying a coupling more important at low wavelengths than at high wavelengths.

6. Divider according to any one of claims 1 to 5, **characterized in that**:

   in the first and third parts of the 2 to 2 divider element, the first and second guides can be brought close to each other and/or separated from each other moving along the arc of a circle with radius R $\geq$ Rc, or according to a sinusoidal type function with a minimum radius of curvature R $\geq$ Rc, where the value Rc is defined as being the critical radius of curvature above which there are no longer any curvature losses at the highest operating wavelength.

7. Divider according to claim 6, **characterized in that** R = Rc.

8. Divider according to any one of claims 1 to 7, **characterized in that**
n is greater than 2, and this divider comprises in the substrate a 2 to 2 optical divider element and (n-2) 1 to 2 cascaded divider elements so that the divider comprises 2 inputs corresponding to the first and second guides of the 2 to 2 divider element, and n outputs.

9. Divider according to claim 8, **characterized in that** the (n-2) 1 to 2 divider elements are chosen among Y couplers and/or junctions.

**Patentansprüche**

1. 2 x n-Leistungsteiler in integrierter Optik, wobei n eine ganze Zahl größer als oder gleich 2 ist, umfassend in einem Substrat mindestens ein optisches 2 x 2-Teilerelement (15), wobei dieses Element einen ersten und einen zweiten Leiter (G1, G2) mit Breiten W1 bzw. W2 umfasst, die in der Lage sind, eine in einen der Leiter eingeführte Eingangslichtwelle (E) in eine erste und eine zweite Ausgangswelle (S1, S2) zu teilen, die von dem ersten bzw. dem zweiten Leiter befördert werden, wobei der erste und der zweite Leiter jeweils mindestens drei Teile umfassen:

- einen ersten Teil (I) von einem ersten Kopplungstyp, in dem der erste und der zweite Leiter sich allmählich bis zu einem Abstand Dc nähern, der nicht null und kleiner als ein Schwellenabstand Ds ist, der dem Minimumabstand entspricht, von dem an die in einen der Leiter eingeführte Eingangslichtwelle in der Lage ist, mindestens zum Teil in dem anderen Leiter gekoppelt zu werden,
- einen zweiten Teil (II) von einem zweiten Kopplungstyp von der Länge Lc, Kopplungslänge genannt, in dem die Leiter zueinander im Wesentlichen parallel sind und um den Wert Dc beabstandet sind,
- und einen dritten Teil (III) von einem ersten Kopplungstyp, in dem die Leiter sich allmählich vom Wert Dc entfernen, um einen Abstand von einem Wert von größer als Ds zu erreichen,

wobei die Werte Dc, Lc, W1 und W2 so gewählt sind, dass man ein achromatisches Teilerelement bei den Betriebswellenlängen des Teilers erhält, wobei die Werte Dc und Lc so gewählt sind, dass der erste Kopplungstyp und der zweite Kopplungstyp sich mit den Wellenlängen umgekehrt ändern, **dadurch gekennzeichnet, dass**, wenn das 2 x 2-Teilerelement in Spektralfenstern 1260-1360 nm und 1480-1660 nm arbeitet und ein Teilungsverhältnis CR gleich 0,5 aufweist, man die Breite W1 und W2 von 1,6 $\mu$m bis Wc, den Abstand Dc von 0,6 bis 2,6 $\mu$m und die Länge Lc von 0 bis 450 $\mu$m wählt, wobei Wc die Maximumbreite ist, bei der die Leiter bei diesen Spektralfenstern monomodal sind.

2. Teiler nach Anspruch 1, **dadurch gekennzeichnet, dass** das Substrat Glas ist und die Leiter durch Ionenaustausch in dem Substrat gebildet sind.

3. Teiler nach einem der Ansprüche 1 bis 2, **dadurch gekennzeichnet, dass** der erste und der zweite Leiter (G1, G2) solche Breiten W1 bzw. W2 aufweisen, dass das 2 x 2-Teilerelement in Berücksichtigung der Werte von Dc und Lc ein achromatisches Verhalten in den Betriebsspektralfenstern von 1260 bis 1360 nm und von 1480 bis 1660 nm aufweist.

4. Teiler nach einem der Ansprüche 1 bis 3, **dadurch gekennzeichnet, dass** die Leiter (G1, G2) des 2 x 2-Teilerelements sich symmetrisch nähern und/oder voneinander entfernen.

5. Teiler nach einem der Ansprüche 1 bis 4, **dadurch gekennzeichnet, dass** der Wert Dc kleiner als oder gleich einem Wert Dx ist, der dem Abstand zwischen dem ersten und dem zweiten Leiter entspricht, bei dem die Kopplung zwischen den Leitern von stark in schwach umgekehrt wird und umgekehrt, wobei die schwache Kopplung eine Kopplung bedeutet, die bei den großen Wellenlängen stärker als bei den kleinen Wellenlängen ist, und die starke Kopplung eine Kopplung bedeutet, die bei den kleinen Wellenlängen stärker als bei den großen Wellenlängen ist.

6. Teiler nach einem der Ansprüche 1 bis 5, **dadurch gekennzeichnet, dass** in dem ersten und in dem zweiten Teil des 2 x 2-Teilerelements die Annäherung des ersten und des zweiten Leiters und/oder die Entfernung dieser Leiter voneinander gemäß einem Kreisbogen mit dem Radius R $\geq$ Rc oder gemäß einer Sinusfunktion stattfinden, die einen solchen Mindestkrümmungsradius R aufweist, dass R ≥ Rc, worin Rc als der kritische Krümmungsradius definiert ist, über dem es keine Krümmungsverluste bei der größten Wellenlänge der Betriebswellenlängen gibt.

7.  Teiler nach Anspruch 6, **dadurch gekennzeichnet, dass** R = Rc.

8.  Teiler nach einem der Ansprüche 1 bis 7, **dadurch gekennzeichnet, dass**, wenn n größer als 2 ist, dieser Teiler in dem Substrat ein optisches 2 x 2-Teilerelement und n-2 kaskadierte 1 x 2-Teilerelemente aufweist, so dass der Teiler 2 Eingänge, die dem ersten und dem zweiten Leiter des 2 x 2-Teilerlelements entsprechen, und n Ausgänge aufweist.

9.  Teiler nach Anspruch 8, **dadurch gekennzeichnet, dass** die n-2 1 x 2-Teilerelemente aus Kopplern und/oder Y-Verbindungen ausgewählt sind.

# FIG. 1

# FIG. 2

FIG. 3

EP 1 558 952 B1

FIG. 4

FIG. 5

FIG. 6